(19) Europäisches Patentamt
European Patent Office
Office européen des brevets

(11) Publication number: **0 679 670 A1**

# (12) EUROPEAN PATENT APPLICATION

(21) Application number: **95105894.0**

(22) Date of filing: **20.04.95**

(51) Int. Cl.6: **C08G 18/61**, C09J 175/04, B32B 7/12

(30) Priority: **28.04.94 US 235004**

(43) Date of publication of application: **02.11.95 Bulletin 95/44**

(84) Designated Contracting States: **BE DE ES FR GB IT SE**

(71) Applicant: **BASF CORPORATION**
**3000 Continental Drive North**
**Mount Olive,**
**New Jersey 08728-1234 (US)**

(72) Inventor: **Koller, Hans J.**
**8180 Manchester Road**
**Grosse Ile,**
**Michigan 48138 (US)**

(74) Representative: **Bernhardt, Wolfgang Willy-Hans**
**BASF Aktiengesellschaft,**
**Patentabteilung ZDX/A - C6**
**D-67056 Ludwigshafen (DE)**

## (54) Polyurethane adhesive containing a siloxane internal mold release and its use in thermoformable laminates.

(57) The invention relates to a two-component polyurethane adhesive containing a siloxy-based carbinol compound acting as a mold release agent and the use of such adhesive to bond molded thermoformable laminates without sticking to mold surfaces.

EP 0 679 670 A1

The invention relates to a two-component polyurethane adhesive containing a siloxy-based carbinol compound acting as a mold release agent and the use of such adhesive to bond molded thermoformable laminates without sticking to mold surfaces.

Thermoformable polymer foams have found wide applications in recent years in the transportation industry as headliners and door and trim panels, hood liners, and sound insulation trim for machinery. Because these foams can be thermoformed into a variety of shapes and have good sound insulation characteristics, their use in the interior of automobiles was found to be advantageous. Thermoformable foams are described in U.S. Patents 4,741,951; 4,508,774; and 4,727,095. In applications such as headliners and door panels, however, thermoformable foams alone are too soft and weak to be self supporting. To avoid sag and lend rigidity and strength to the foam while retaining the cushion feel of the foam itself, thermoformable foams have been sandwiched between woven and nonwoven mats adhesively bonded to the foam. The sandwich construction is well known and described in U.S. Patents 4,695,501, 5,089,328, 5,007,976, and 5,219,893. Three- and five-layer constructions for manufacturing thermoformable laminates are also described in "Headliners and Other interior Trim Parts Made of Thermoformable Urethane Foam Core Sandwiches," by J.R. Stoll and Dietrich G. Shlotterbeck, SAE Technical Paper Series, February 26 to March 2, 1990. As described in this publication, fiberglass mats, the scrim material, and the decorative (face) covering material are stretched on a rack and sprayed with an adhesive. The sprayed mats along with a preheated, optionally adhesive sprayed, thermoformable foam are placed into a mold opening and pressed into the shape of the mold at about 140°C to 200°C under 5 to 100 tons of pressure. At these temperatures, the adhesive rapidly cures and bonds the thermoformable foam to the reinforcement and cover layers.

During the molding operation, high molding pressures often cause the adhesive to bleed through the matting and scrim layers onto the metal mold surfaces. As a result, molded parts employing an adhesive applied in liquid form often stick to the mold, even if the mold surface is waxed, requiring the part to be forcibly extracted from the mold and the mold surfaces to be cleaned of the adhesive. Forcible extractions also tend to warp the part. To avoid problems with parts adhering to the mold, an external mold release is sprayed onto the waxed mold surfaces usually after every molding cycle to ensure good release without any adhesive adhering to the mold surfaces. However, spraying the mold after every release is an extra processing step which is time consuming and increases the overall cycle time between each molded part. Also, external mold release agents are usually manually sprayed and release a mist of airborne particles into the air; and it is difficult to consistently ensure uniform application of the mold release over the entire mold surface.

As a result of the problems associated with external mold releases, there has been a long-felt desire to substantially reduce the number of times an external mold release must be applied to the mold and even to dispense altogether with external mold releases. The method we have investigated is to add a mold release agent in the adhesive as an internal mold release which would have the advantage of uniform distribution throughout the adhesive. A major hurdle we faced, however, was the seemingly incompatible requirements placed upon the adhesive; that is, function as an adhesive to firmly adhere the polymer foam core to the reinforcing mats and other optional layers such as the scrim and facing cover, while ceasing its function as an adhesive to a metal mold surface by exhibiting good releasing properties. An internal mold release which has good mold release properties would be expected to also adversely affect the adhesion between the laminate layers bonded by an adhesive which had previously shown adhesion to metal mold surfaces and between the laminate layers.

It is an object of the invention to reduce the number the times an external mold release must be applied to a metal mold surface for molding thermoformable composites. It is also an object of the invention to provide an adhesive which exhibits good adhesion to layers of material in a laminate while simultaneously exhibiting releasibility from metal mold surfaces. These objects have been met by employing a two-component polyurethane adhesive containing a siloxy-based polycarbinol compound having two or more secondary hydroxy functional groups. The polycarbinol compound provides a good releasibility of a composite article from metal mold surfaces without affecting the adhesion provided by the adhesive between a thermoformable polymer foam and a reinforcing scrim and/or covering material. Also described is a process for making the two-component polyurethane adhesive containing a siloxy-based polycarbinol compound and for making laminates empolying the adhesive.

The internal siloxy-based polycarbinol mold release compound employed in the two-component heat curable adhesion of the invention contains two or more secondary hydroxyl groups, preferably an average of three hydroxyl groups per siloxy-based carbinol molecule. In one embodiment of the invention, the dimethylsiloxane polycarbinol compound used in the invention is represented by the following generic formula:

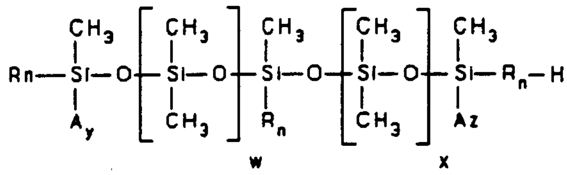

wherein each of R are independently an alkyl radical having 1 to 20 carbon atoms; an alicyclic, an aryl, an alkaryl or an aralkyl having 1 to 25 carbon atoms in the alkyl group; an aliphatic ether group; or a polyester group; and a secondary hydroxyl functional group is substituted onto at least two, preferably onto each of the R groups;

each of A are independently one or more silicone atoms containing alkyl, alicyclic, cycloalkyl, aryl, alkyloxy, alkaryl, aralkyl, or arylalkoxy groups having 1 to 25 carbon atoms in each aliphatic portion; an organosiloxane; hydrogen, or a alkyl having 1 to 25 carbon atoms;

n is an integer from 1 to 10;

and w + x + y + z totals an integer which would correspond to an average hydroxyl equivalent weight ranging from 200 to 4000.

Preferably, each of R are independently an alkyl having from 1 to 10 carbon atoms, an alkoxy, or an ether having the formula

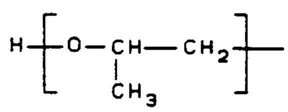

and preferably A is hydrogen, a $C_1$ - $C_4$ alkyl, or a siloxane having the formula

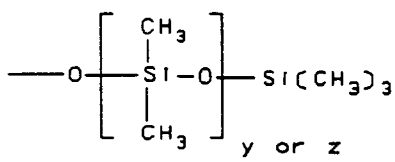

n is an integer from 1 to 6, and w + x + y + z totals an integer corresponding to an average hydroxyl equivalent weight of the molecule ranging from 1250 to 3000.

In a more preferable embodiment of the invention, the siloxane-based polycarbinol is Dow Corning® 1248 fluid, commercially available from Air Products, having an average of three hydroxyl sites per molecule and an average hydroxyl equivalent weight of about 1725 to 2225, and most likely about 2000. It is believed that this fluid corresponds to the formula:

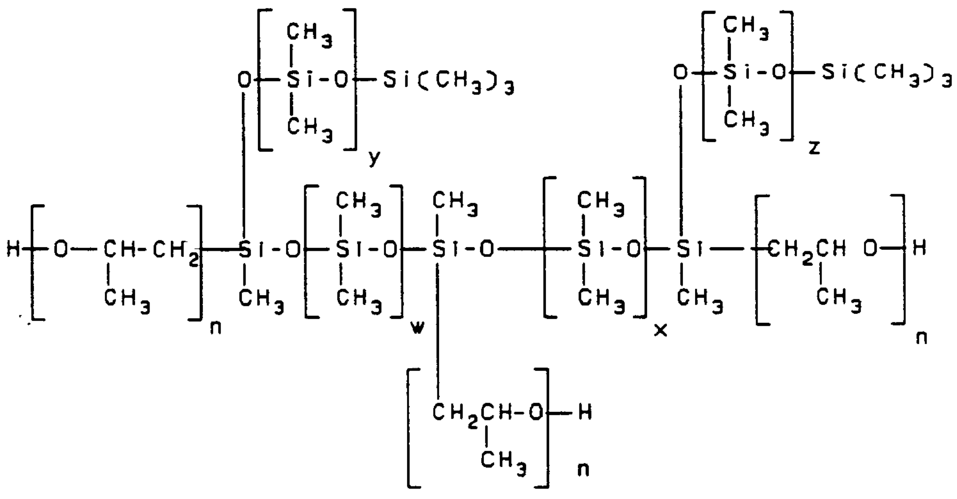

where each of n is independently an integer ranging from 1 to 4, and W + X + Y + Z is about 70, or corresponds to an average hydroxyl equivalent weight of the molecule of about 2000. The methods of manufacture of such polycarbinols is generally described in U.S. Patent No. 4,130,708, the disclosure of which is incorporated herein by reference.

The amount of the siloxy-based polycarbinol compound is dependent upon, at the lower limit, attaining release of the part from metal mold surfaces, and at the upper limit, cost considerations and maintaining good adhesion between the parts of the laminate adhered. "Good adhesion" is defined as a failure or tear of one or both layers of material when one attempts to mechanically delaminate the layers, such as a foam tear upon attempted delamination of a foam and a mat. Amounts of the polycarbinol suitable in the present invention range from 0.5 weight percent to 5.0 weight percent, preferably from 0.8 weight percent to 1.5 weight percent, based upon the weight of all ingredients except the isocyanate compounds. Although amounts outside of the preferable range have been found useful, effective mold release was obtained at levels within the preferable range.

The polycarbinol compound may be mixed with the other adhesion forming components at the mixhead, or may be pre-blended with the polyol or a prepolymer prior to application of the adhesive through a mixhead. High pressure impingement or low pressure rotary mixheads may be used. It is preferred that the polycarbinol compound is preblended with the polyol prior to introduction of the reaction ingredients into the mixhead.

The polycarbinol compound may be mixed into any two-component polyurethane adhesive composition. Such compositions comprise a polyisocyanate or a prepolymer of the isocyanate as a first component and as a second component a compound having at least two isocyanate reactive hydrogens, optionally catalysts, crosslinkers, fillers, plasticizers, pigments, and thixotropic agents as a second component. The two-component adhesives of the invention are preferably heat curable. The heat may be provided by the exothermic reaction occurring between one or more of the second component ingredients and isocyanate, and additional heat to speed up the curing process may be provided by ovens or the mold platens. Curing temperatures range from 60 °C to 250 °C, and preferably the adhesive is cured at 140 °C to 210 °C.

The adhesive is liquid at 25 °C and may be applied to a surface by spray, rollers or belts. The adhesive preferably has a short pot life to shorten the processing time between application and cure. Although the polycarbinol compound may be employed in any two-component adhesive system, a preferred adhesive is one which is heat curable and has a short pot life ranging from one minute to one hour, more preferably from three minutes to about six minutes.

As mentioned above, the second component of the adhesive comprises polyol(s) and optionally catalysts, crosslinkers, fillers, plasticizers, pigments, and thixotropic agents. The relatively high-molecular-weight compound containing at least two reactive hydrogen atoms expediently has a functionality of from 2 to 8, preferably from 2 to 6, and a number average molecular weight of from 400 to 8000, preferably from 1200 to 6000. Suitable examples include polyether-polyamines and/or preferably polyols such as polyether polyols, polyester polyols, polythioetherpolyols, polyesteramides, hydroxyl-containing polyacetals and hydroxyl containing aliphatic polycarbonates, or mixtures of at least two of said polyols. Particular preference is given to polyester polyols and polyether polyols.

Suitable polyester polyols may be prepared, for example, from organic dicarboxylic acids having from 2 to 12 carbon atoms, preferably aliphatic dicarboxylic acids having from 4 to 6 carbon atoms and polyhydric alcohols, preferably diols, having from 2 to 12 carbon atoms, preferably from 2 to 6 carbon atoms. Examples of suitable dicarboxylic acids are succinic acid, glutaric acid, adipic acid, suberic acid, azelaic acid, sebacic acid, decanedicarboxylic acid, maleic acid, fumaric acid, phthalic acid, isophthalic acid, and terephthalic acid. The dicarboxylic acids may be used either individually or mixed with one another. The free dicarboxylic acids may also be replaced by the corresponding dicarboxylic acid derivatives, for example, dicarboxylic acid esters of alcohols having 1 to 4 carbon atoms or dicarboxylic anhydrides. Preference is given to dicarboxylic acid mixtures comprising succinic acid, glutaric acid, and adipic acid in ratios of, for example, from 20 to 35:35 to 50:20 to 32 parts by weight, and in particular adipic acid. Examples of dihydric and polyhydric alcohols, in particular alkanediols and dialkylene glycols, are ethanediol, diethylene glycol, 1,2- and 1,3-propanediol, dipropylene glycol, 1,4-butanediol, 1,5-pentanediol, 1,6-hexanediol, 1,10-decanediol, glycerol and trimethylolpropane. Preference is given to ethanediol, diethylene glycol, 1,4-butanediol, 1,5-pentanediol, 1,6-hexanediol and mixtures of at least two of said diols, in particular, mixtures of 1,4-butanediol, 1,5-pentanediol, and 1,6-hexanediol. Furthermore, polyester polyols made from lactones, e.g., $\epsilon$-caprolactone or hydroxycarboxylic acids, e.g. $\omega$-hydroxycaproic acid, may also be employed.

The polyester polyols may be prepared by polycondensing the organic, e.g. aromatic and preferably aliphatic polycarboxylic acids and/or derivatives thereof and polyhydric alcohols without using a catalyst or preferably in the presence of an esterification catalyst, expediently in an inert gas atmosphere, e.g. nitrogen, carbon monoxide, helium, argon, inter alia, in the melt at from 150°C to 250°C, preferably from 180°C to 220°C, at atmospheric pressure or under reduced pressure until the desired acid number, which is advantageously less than 10, preferably less than 2, is reached. In a preferred embodiment, the esterification mixture is polycondensed at the abovementioned temperatures under atmospheric pressure and subsequently under a pressure of less than 500 mbar, preferably from 50 to 150 mbar, until an acid number of from 80 to 30, preferably from 40 to 30, has been reached. Examples of suitable esterification catalysts are iron, cadmium, cobalt, lead, zinc, antimony, magnesium, titanium and tin catalysts in the form of metals, metal oxides or metal salts. However, the polycondensation may also be carried out in the liquid phase in the presence of diluents and/or entrainers, e.g. benzene, toluene, xylene or chlorobenzene, for removal of the water of condensation by azeotropic distillation.

The polyester polyols are advantageously prepared by polycondensing the organic polycarboxylic acids and/or derivatives thereof with polyhydric alcohols in a molar ratio of from 1:1 to 1.8, preferably from 1:1.05 to 1.2.

The polyester polyols obtained preferably have a functionality of from 2 to 4, in particular from 2 to 3, and a molecular weight of from 480 to 3000, preferably from 1200 to 3000, in particular from 1800 to 2500.

However, the preferred polyols are polyoxyalkylene polyether polyols prepared by conventional processes, for example by anionic polymerization using alkali metal hydroxides, such as sodium hydroxide or potassium hydroxide, or alkali metal alkoxides, such as sodium methoxide, sodium ethoxide, potassium ethoxide or potassium isopropoxide as catalysts and with addition of at least one initiator molecule containing from 2 to 8, preferably from 2 to 6, reactive hydrogen atoms in bound form, or by cationic polymerization using Lewis acids, such as antimony pentachloride, boron fluoride etherate, inter alia, or bleaching earth as catalysts, from one or more alkylene oxides having from 2 to 4 carbon atoms in the alkylene moiety.

Examples of suitable alkylene oxides are tetrahydrofuran, 1,3-propylene oxide, 1,2-and 2,3-butylene oxide, styrene oxide and preferably ethylene oxide and 1,2-propylene oxide. The alkylene oxides may be used individually, alternately one after the other or as mixtures. Examples of suitable initiator molecules are water, organic dicarboxylic acids, such as succinic acid, adipic acid, phthalic acid and terephthalic acid, aliphatic and aromatic, unsubstituted or N-mono-, N,N- and N,N'-dialkyl-substituted diamines having from 1 to 4 carbon atoms in the alkyl moiety, such as unsubstituted or mono- or dialkyl-substituted ethylenediamine, diethylenetriamine, triethylenetetramine, 1,3-propylenediamine, 1,3- and 1,4-butylenediamine, 1,2-, 1,3-, 1,4-, 1,5-, and 1,6-hexamethylenediamine, phenylenediamines, 2,3-, 2,4-, and 2,6-toluenediamine and 4,4'-, 2,4'- and 2,2'-diaminodiphenylmethane. Other suitable intiator molecules are alkanolamines, e.g., ethanolamine, N-methyl- and N-ethylethanolamine, dialkanolamines, e.g. diethanolamine, N-methyl- and N-ethyldiethanolamine, and trialkanolamines, e.g. triethanolamine, and ammonia.

Preference is given to polyhydric alcohols, such as ethanediol, 1,2- and 1,3-propanediol, diethylene glycol, dipropylene glycol, 1,4-butanediol, 1,6-hexanediol, glycerol, trimethylolpropane, pentaerythritol, sorbitol, sucrose, and mixtures thereof.

The polyether polyols, preferably polyoxypropylene- and polyoxypropylenepolyoxyethylene polyols, have a functionality of from 2 to 6 and number average molecular weights of from 400 to 8000, preferably from 1200 to 6000, and suitable polyoxytetramethylene glycols having a molecular weight of up to approximately 3500.

Other suitable polyether polyols are polymer-modified polyether polyols, preferably graft dispersion polyether polyols, in particular those based on styrene and/or acrylonitrile and prepared by in-situ polymerization of acrylonitrile, styrene or preferably mixtures of styrene and acrylonitrile, for example in a weight ratio of from 90:10 to 10:90, preferably from 70:30 to 30:70, expediently in the abovementioned polyether polyols by a method similar to that in U.S. Patents 3,304,273; 3,383,351; and 3,523,093; and polyether polyol dispersions which contain, as the disperse phase, usually in an amount of from 1 to 50 percent by weight, preferably from 2 to 25 percent by weight, for example polyureas, polyhydraxides, polyurethanes containing tertamino groups in bound form, and/or melamine and are described, for example, in U.S. Patent 4,304,708 and U.S. Patent No. 4,374,209.

Like the polyester polyols, the polyether polyols can be used individually or in the form of mixtures. Furthermore, they may be mixed with the graft polyether polyols or polyester polyols and the hydroxyl containing polyesteramides, polyacetals, polycarbonates and/or polyether polyamines.

Examples of suitable hydroxyl-containing polyacetals are the compounds which can be prepared from glycols, such as diethylene glycol, triethylene glycol, 4,4'-dihydroxyethoxydiphenyldimethylmethane, hexanediol and formaldehyde. Suitable polyacetals can also be prepared by polymerizing cyclic acetals.

Suitable hydroxyl-containing polycarbonates are those of a conventional type, which can be prepared, for example, by reacting diols, such as 1,3-propanediol, 1,4-butanediol and/or 1,6-hexanediol, diethylene glycol, triethylene glycol or tetraethylene glycol, with diaryl carbonates, e.g., diphenyl carbonate or phosgene.

The polyester amides include, for example, the predominantly linear condensates obtained from polybasic, saturated and/or unsaturated carboxylic acids or anhydrides thereof and polyhydric, saturated and/or unsaturated amino alcohols, or mixtures of polyhydric alcohols and amino alcohols and/or polyamines.

Suitable polyether polyamines can be prepared from the abovementioned polyether polyols by known processes. The examples which may be mentioned are the cyanoalkylation of polyoxyalkylene polyols and a subsequent hydrogenation of the resultant nitrile (U.S. Patent No. 3,267,050) or the partial or complete amination of polyoxyalkylene polyols using amines or ammonia in the presence of hydrogen and catalysts (DE No. 12 15 373).

Included among the polyether polyols are polyoxyethylene glycol, polyoxypropylene glycol, polyoxybutylene glycol, polytetramethylene glycol, block copolymers, for example combinations of polyoxypropylene and polyoxyethylene poly-1,2-oxybutylene and polyoxyethylene polyols, poly-1,4-tetramethylene and polyoxyethylene polyols, and copolymer polyols prepared from blends or sequential addition of two or more alkylene oxides. The polyalkylene polyether polyols may be prepared by any known process such as, for example, the process disclosed by Wurtz in 1859 and Encyclopedia of Chemical Technology, Vol. 7, pp. 257-262, published by Interscience Publishers, Inc. (1951) or in U.S. Pat. No. 1,922,459.

One or a mixture of the above-mentioned polyols may be employed. Preferred are the polyoxyalkylene polyether polyols, where the polyol composition comprising one or more of the polyether polyols has an average hydroxyl number ranging from 250 to 600 to yield an adhesive which is rigid and strong while curing quickly as discussed above. A suitable two-component heat curable adhesive is commercially available from BASF Corporation as Elastoflex® 2104.

Optional compounds include catalysts, crosslinkers/chain extenders, flame retardants, fillers, plasticizers, pigments, and thixotropic agents.

Catalysts accelerate the reaction between polyols and other optional compounds having isocyanate reactive hydrogens with isocyanates to form urethane and/or isocyanurate bonds are preferably employed in amounts which will produce the desired pot life. Suitable amounts of tertiary amine catalyst range from 0.05 to 5.0 weight percent, and of metal salts range from 0.05 to 1.5 weight percent, based on the weight of all ingredients except the isocyanate, and the greater the amount of catalyst, the shorter the pot life of the adhesive.

Any suitable urethane forming catalyst may be used including tertiary amines such as, for example, triethylenediamine, N-methylmorpholine, N-ethylmorpholine, diethylethanolamine, N-cocomorpholine, 1-methyl-4-dimethylaminoethylpiperazine, 3-methoxypropyldimethylamine, N,N,N'-trimethylisopropyl propylenediamine, 3-diethylaminopropyldiethylamine, dimethylbenzylamine, and the like. Other suitable catalysts are, for example, stannous chloride, dibutyltin di-2-ethyl hexanoate, stannous oxide, as well as other organometallic compounds such as are disclosed in U.S. Patent No. 2,846,408.

It is possible to optionally employ blowing agents to obtain a cellular adhesive, although it is preferred that no blowing agents should be intentionally added. In many cases, residual amounts of water may be left over in the polyols used in the adhesive, and it has been found that small amounts of water advantageously blow the adhesive slightly to impregnate the foam and the reinforcing mats/cover layers. Therefore, it is preferred to employ water in an amount of 0.5 weight percent or less based on the weight of all ingredients except the isocyanate.

Physically active blowing agents contemplated as suitable additives in the first or second components of the adhesive comprise alkanes having 4 to 12 carbon atoms, preferable 5 or 6 carbon atoms, such as n-pentane, isopentane, or n-hexane; cycloalkanes having 4 to 6 carbon atoms preferable 5 or 6 carbon atoms, such as cyclopentane; linear or cyclic, saturate or olefinically unsaturated ethers having 2 to 5 carbon atoms, such as dimethylether, diethylether, methylethylether, vinyl methyl or ethyl ether, divinyl ether, and THF; aliphatic carboxylic acid esters having a maximum boiling point of 142°C., preferably below 80°C., such as 1-4 carbon acetates and methyl or ethyl formate; aliphatic and/or cycloaliphatic ketones having 3 to 5 carbon atoms, such as acetone, methyl ethyl ketone, and cyclopentane; partially halogenated chlorofluorocarbons having 1 or 2 carbon atoms, such as R22, R123, R141b; perfluorinated, linear or cyclic ethers having 4 to 12 carbon atoms, preferably 4 to 6 carbon atoms, such as perfluorodineopyl or ether or perfluoroethyl propyl ether; and preferably fluorinated or perfluorinated, advantageously aliphatic or cycloaliphatic hydrocarbons having 3 to 8 carbon atoms, preference being given to aliphatic or cycloaliphatic, fluorinated hydrocarbons having 3 to 6 carbon atoms which are liquid at room temperature and contain at least one bonded hydrogen atom and aliphatic or cycloaliphatic, perfluorinated hydrocarbons having 4 to 7 carbon atoms. These blowing agents, including water, would also be suitable in the manufacture of the thermoformable polymer foam. As for the adhesive, however, it is preferred that no physically active blowing agent is added with only minor amounts of density reduction occuring through residual water in the second component.

Optional flame retardant compounds are tetrakis(2-chloroethyl) ethylene phosphonate, pentabromodiphenyl oxide, tris(1,3-dichloropropyl) phosphate, tris(beta-chloroethyl) phosphate, molybdenum trioxide, ammonium molybdate, ammonium phosphate, pentabromodiphenyloxide, tricresyl phosphate, 2,3-dibromopropanol, hexabromocyclododecane, dibromoethyldibromocyclohexane, tris(2,3-dibromopropyl)-phosphate, tris(beta-chloropropyl)phosphate, and melamine.

The adhesive of the invention may also optionally contain surfactants, colorants or pigments, flame retardants, and agents which protect against hydrolysis, fungi, and bacterial growth. Examples of suitable flameproofing agents are tricresyl phosphate, tris(2-chloroethyl) phosphate, tris(2-chloropropyl) phosphate, and tris(2,3-dibromopropyl) phosphate. In addition to the above-mentioned halogen-substituted phosphates, it is also possible to use inorganic or organic flameproofing agents, such as red phosphorus, aluminum oxide hydrate, antimony trioxide, arsenic oxide, ammonium polyphosphate (Exolit®) and calcium sulfate, expandable graphite or cyanuric acid derivatives, e.g., melamine, or mixtures of two or more flameproofing agents, e.g., ammonium polyphosphates and melamine, and, if desired, corn starch, or ammonium polyphosphate, melamine, and expandable graphite and/or, if desired, aromatic polyesters, in order to flameproof the polyisocyanate polyaddition products. In general, from 2 to 50 parts by weight, preferably from 5 to 25 parts by weight, of said flameproofing agents may be used per 100 parts by weight of the polyols.

Chain-extending agents which may optionally be employed in the preparation of the polyurethane foams include those compounds having at least two functional groups bearing active hydrogen atoms, and preferably having molecular weight ranging less than 400, more preferably 60 to 300, such as water, hydrazine, primary and secondary diamines, amino alcohols, amino acids, hydroxy acids, glycols, or mixtures thereof. A preferred group of chain-extending agents includes water, ethylene glycol, 1,3-propanediol, 1,10-decanediol, o,-m,-p-dihydroxycyclohexane, diethylene glycol, 1,6-hexanediol, glycerine, trimethylol propane, 1,2,4-, 1,3,5-trihydroxycyclohexane, bis(2-hydroxyethyl) hydroquinone, 1,4-butanediol and primary and secondary diamines which react more readily with a prepolymer than does water such as phenylene diamine, 1,4-cyclohexane-bis-(methylamine), ethylenediamine, diethylenetriamine, N-(2-hydroxypropyl)ethylenediamine, N,N'-di(2-hydroxypropyl)ethylenediamine, piperazine, and 2-methylpiperazine. The organic polyisocyanates include all essentially known aliphatic, cycloaliphatic, araliphatic and preferably aromatic multivalent isocyanates. Specific examples include: alkylene diisocyanates with 4 to 12 carbons in the alkylene radical such as 1,12-dodecane diisocyanate, 2-ethyl-1,4-tetramethylene diisocyanate, 2-methyl-1,5-pentamethylene diisocyanate, 1,4-tetramethylene diisocyanate and preferably 1,6-hexamethylene diisocyanate; cycloaliphatic diisocyanates such as 1,3- and 1,4-cyclohexane diisocyanate as well as any mixtures of these isomers, 1-isocyanato-3,3,5-trimethyl-5-isocyanatomethylcyclohexane (isophorone diisocyanate), 2,4- and 2,6-hexahydrotoluene diisocyanate as well as the corresponding isomeric mixtures,

4,4'- 2,2'-, and 2,4'-dicyclohexylmethane diisocyanate as well as the corresponding isomeric mixtures and preferably aromatic diisocyanates and polyisocyanates such as 2,4- and 2,6-toluene diisocyanate and the corresponding isomeric mixtures 4,4'-, 2,4'-, and 2,2'-diphenylmethane diisocyanate and the corresponding isomeric mixtures, mixtures of 4,4'- and 2,4'-diphenylmethane diisocyanates and polyphenylenepolymethylene polyisocyanates (polymeric MDI), as well as mixtures of polymeric MDI and toluene diisocyanates. The organic di- and polyisocyanates can be used individually or in the form of mixtures.

Frequently, so-called modified multivalent isocyanates, i.e., products obtained by the partial chemical reaction of organic diisocyanates and/or polyisocyanates are used. Examples include diisocyanates and/or polyisocyanates containing ester groups, urea groups, biuret groups, allophanate groups, carbodiimide groups, isocyanurate groups, and/or urethane groups. Specific examples include organic, preferably aromatic, polyisocyanates containing urethane groups and having an NCO content of 33.6 to 15 weight percent, preferably 31 to 21 weight percent, based on the total weight, e.g., with low molecular weight diols, triols, dialkylene glycols, trialkylene glycols, or polyoxyalkylene glycols with a molecular weight of up to 1500; modified 4,4'-diphenylmethane diisocyanate or 2,4- and 2,6-toluene diisocyanate, where examples of di- and polyoxyalkylene glycols that may be used individually or as mixtures include diethylene glycol, dipropylene glycol, polyoxyethylene glycol, polyoxypropylene glycol, polyoxyethylene glycol, polyoxypropylene glycol, and polyoxypropylene polyoxyethylene glycols or -triols. Prepolymers containing NCO groups with an NCO content of 25 to 9 weight percent, preferably 21 to 14 weight percent, based on the total weight and produced from the polyester polyols and/or preferably polyether polyols described below; 4,4'-diphenylmethane diisocyanate, mixtures of 2,4'- and 4,4'-diphenylmethane diisocyanate, 2,4,- and/or 2,6-toluene diisocyanates or polymeric MDI are also suitable. Furthermore, liquid polyisocyanates containing carbodiimide groups having an NCO content of 33.6 to 15 weight percent, preferably 31 to 21 weight percent, based on the total weight, have also proven suitable, e.g., based on 4,4'- and 2,4'- and/or 2,2'-diphenylmethane diisocyanate and/or 2,4'- and/or 2,6-toluene diisocyanate. The modified polyisocyanates may optionally be mixed together or mixed with unmodified organic polyisocyanates such as 2,4'- and 4,4'-diphenylmethane diisocyanate, polymeric MDI, 2,4'-and/or 2,6-toluene diisocyanate.

For the purposes of the invention, fillers are conventional organic and inorganic fillers and reinforcing agents. Specific examples are inorganic fillers, such as silicate minerals, for example, phyllosilicates such as antigorite, serpentine, hornblendes, amphiboles, chrysotile, and talc; metal oxides, such as kaolin, aluminum oxides, titanium oxides and iron oxides; metal salts, such as chalk, baryte and inorganic pigments, such as cadmium sulfide, zinc sulfide and glass, inter alia; kaolin (china clay), aluminum silicate and coprecipitates of barium sulfate and aluminum silicate, and natural and synthetic fibrous minerals, such as wollastonite, metal, and glass fibers of various lengths. Examples of suitable organic fillers are carbon black, melamine, colophony, cyclopentadienyl resins, cellulose fibers, polyamide fibers, polyacrylonitrile fibers, polyurethane fibers, and polyester fibers based on aromatic and/or aliphatic dicarboxylic acid esters, and in particular, carbon fibers.

The inorganic and organic fillers may be used individually or as mixtures and may be introduced into the polyol composition or isocyanate side in amounts of from 0.5 to 40 percent by weight, based on the weight of components (the polyols and the isocyanate); but the content of mats, nonwovens and wovens made from natural and synthetic fibers may reach values of up to 80 percent by weight.

Organic polyisocyanates which may be employed include aromatic, aliphatic, and cycloaliphatic polyisocyanates and combinations thereof. Representative of these types are the diisocyanates such as m-phenylene diisocyanate, 2,4-toluene diisocyanate, 2,6-toluene diisocyanate, mixtures of 2,4- and 2,6-toluene diisocyanate, hexamethylene diisocyanate, tetramethylene diisocyanate, cyclohexane-1,4-diisocyanate, hexahydrotoluene diisocyanate (and isomers), naphthalene-1,5-diisocyanate, 1-methoxyphenyl-2,4-diisocyanate, 4,4'-diphenylmethane diisocyanate, mixtures of 4,4'-and 2,4'-diphenylmethane diisocyanate, 4,4'-biphenylene diisocyanate, 3,3'-dimethoxy-4,4'-biphenyl diisocyanate, 3,3'-dimethyl-4,4'-biphenyl diisocyanate and 3.3'-dimethyldiphenylmethane-4,4'-diisocyanate; the triisocyanates such as 4,4',4''-triphenylmethane triisocyanate, and toluene 2,4,6-triisocyanate; and the tetraisocyanates such as 4,4'-dimethyldiphenylmethane-2,2'-5,5'-tetraiscryanateandpolymeric polyisocyanates such as polymethylene polyphenylene polyisocyanate, and mixtures thereof. Especially useful due to their availability and properties are 4,4'-diphenylmethane diisocyanate, polymethylene polyphenylene polyisocyanate, or mixtures thereof for rigid foams, or a mixture of the foregoing with toluene diisocyanates for semi-rigid foams.

Crude polyisocyanates may also be used in the compositions of the present invention, such as crude toluene diisocyanate obtained by the phosgenation of a mixture of toluenediamines or crude diphenylmethane isocyanate obtained by the phosgenation of crude diphenylmethane diamine. The preferred or crude isocyanates are disclosed in U.S. Pat. No. 3,215,652.

The isocyanates may be reacted with the polyol and any other compound having an isocyanate reactive hydrogen at indices from 60 to 500, preferably from 80 to 120, more preferably under 100. The equivalent weight ratio of the polycarbinol compound to the isocyanate to the compound having at least two isocyanate reactive hydrogens is in the range of 0.001:5:1 to 0.04:0.8:1. The amount of free isocyanate groups available for reaction, known as the free isocyanate content, ranges from 5 weight percent to about 45 weight percent.

Prepolymers and quasi-prepolymers are suitable for use as an adhesive, but it is preferred to use quasi-prepolymers having a free NCO content of from 18.5 to 30 weight percent or unmodified isocyanates having a free NCO content from 30 weight percent to 34 weight percent; and, in particular, it is preferred to use isocyanates based on diphenylmethane diisocyanate (MDI) or polyphenylene polymethylene polyisocyanate (polymer MDI), and derivatives or modifications thereof.

The adhesive containing the polycarbinol compound mold release may be applied, preferably by a spray technique, to an upper and/or lower side of a foam surface or a reinforcing layer surface or to any substrate one desires to adhere. In one embodiment of the invention, there is provided a trilaminate structure of a reinforcing layer/thermoformable polymer foam/reinforcing layer. In another embodiment of the invention, there is provided a scrim (optional)/reinforcing layer/thermoformable polymer foam/reinforcing layer/covering layer, and the covering layer itself may be comprised of a dry web or film of thermoplastic adhesive/polymer foam/decorative facing fabric construction where the adhesive is impregnated into the foam backing of the fabric. Thus, the laminate would be comprised of a scrim/reinforcement/thermoformable polymer foam/reinforcement/film or web of thermoplastic adhesive/polymer foam backing/decorative facing, wherein the two-component polyurethane liquid adhesive has been applied to the thermoformable foam or the reinforcement/scrim.

Other embodiments include adding thermoformable polymer foam layers as desired between the reinforcing layers and the scrim or decorative facing to improve the soft feel of the laminate, or adding additional layers of reinforcing mats and scrim.

There are different molding methods available to create the laminate structure, such as described in U.S. Patent No. 4,184,905 and the above-referenced "Headliners and Other Interior Trim Parts Made of Thermoformable Urethane Foam Core Sandwiches" paper by Stoll, et al., each of which is incorporated herein by reference. In one technique, the reinforcing mat along with any scrim and outer decorative facings are stretched on racks and sprayed with the two-component polyurethane adhesive. The racks are placed into the heated mold along with a preheated thermoformable polymer foam. The thermoformable foam may be preheated in an infrared oven, hot air oven, or between contact plates to temperatures ranging from 140 °C to 200 °C, but preferably from 180 °C to 200 °C, to ensure that the shape into which the foam is molded remains fixed. The mold is heated to the curing temperature of the particular two-component polyurethane adhesive, usually from 90 °C to 150 °C, and closes upon the layers with a force of 1 to 50 tons to shape the layers into the mold configuration. Another technique for molding is to apply the adhesive to one or both sides of the thermoformable foam, insert the adhesive coated foam between two reinforcing mats, and fed into a laminator kept at the curing temperature. If the adhesive to create a cured prelaminate of reinforcing mat/foam/reinforcing mat. The prelaminate may then be placed into an oven to preheat the laminate to the thermoforming temperature of the foam, or 180 °C to 200 °C, and subsequently fed into a cold or optionally heated mold having a decorative facing layer in the mold opening. The decorative facing layer may have an adhesive on its foam backing to adhere to the prelaminate, which adhesive may be cold or heat curable. In any one of these methods, the mold halves may be kept at different temperatures to avoid premature cure of the adhesive on a layer while in the open mold waiting for other layers to be inserted as described in U.S. Patent No. 5,082,716.

The thermoformable polymer foam has any desired density and thickness suitable for the type of part being laminated. Typical foam densities range from 1.0 pcf to 20 pcf, and for many applications preferably ranges from 1.5 pcf to 4.0 pcf, with a range of 1.8 pcf to 2.4 pcf being most preferred for headliner applications. The thickness of the foam is typically one-eighth of an inch (1/8") to one and one-half inch ($1\frac{1}{2}$"), with about one-fourth ($\frac{1}{4}$") to one-half inch ($\frac{1}{2}$") being common in the headliner industry. Many applications of the laminate require sound insulation, such as around motor housings or in the interior cab of an automobile. In such cases, the thermoformable foam should be open celled to absorb the sound. By open celled is meant that the foam cell has at least one fractured window pane. It is preferred that the open cell content of the foam is at least 85 percent, more preferably 90 percent or more, meaning that 85 percent or 90 percent or more of the cells have at least one fractured window pane.

Suitable polymer foams include expanded polyether, polyethylene, crosslinked polypropylene, styrene-maleic anhydride, ABS, PVC, polyphenols, polyester, polyurethane. The foam most often employed where acoustics are a concern is a polyurethane foam having an open cell content of at least 85 percent,

preferably 90 percent or more.

Thermoformable polyurethane foams and their method of manufacture are described in U.S. Patents 4,508,744 and 4,741,951, each of which are in their entirety incorporated herein by reference. Thermoformable foams can be flexible, semi-rigid or rigid, but are preferably semi-rigid, and possess good sound absorption, resistance to hydrolysis, cushioning, and thermoformability without losing its shape. Thermoformable polyurethane foams are available commercially under the names of BAYNAT®, CUSTOM FIT®, and MOLTOBREN® foams.

The reinforcing layer(s) are comprised of nonwoven mats, continuous strand rovings, woven cloth or woven spun roving, or woven or nonwoven fabrics, whose fibers are made of synthetics such as polyester, nylon, aramid, acrylic, polyamides, polyetherketones, polyethersulfones, natural fibers such as cotton, hemp, flax, jute, glass, carbon, mineral, Wollastonite, alumina, and ceramics, or fiber blends of the aforementioned fibers. Preferably the reinforcing layer is a nonwoven mat which is less expensive than a woven fabric and strengthens the laminate in all directions under tension. The mat may be made of chopped fibers or continuous strand fibers.

One or more reinforcing mats may be used on each side of the thermoformable foam depending upon the fiber denier and weight. Preferred fibers due to their availability and strength are glass, mineral, wollastonite, and polyester. Also found particularly suitable is a Colback® spunbonded nonwoven mat having bi-component fibers of a polyester core sheathed in a polyamide skin. Most preferable are spunbonded nonwoven glass fiber mats and Colback® spunbonded nonwoven mats.

The scrim layer is a thin woven fabric typically made of cotton or cotton blends or of the same fibers mentioned above and is smoother and finer due to the smaller fiber denier and the weaving. The scrim has the ability to cover surface irregularities, form smooth surfaces, and strengthen the adhesive bonds by drawing the adhesive through the reinforcing layer in a fairly uniform manner. Although the scrim layer does not provide the strength to the laminate that the reinforcing layer does, it does also act as a reinforcement to some degree in its woven directions.

The covering layer can be made of synthetic or natural fiber blends. Suitable fibers are polyamine (nylon), polyester, and acrylic. Fiber deniers in the range of 1 to 30 are suitable, with fiber deniers in the range of 1.5 to 10 being preferred to improve sound damping. The decorative facing layer may be woven or nonwoven. To meet the elongation properties required of the decorative facing layer when molded into shapes having curves, it is preferred to use nonwoven fabrics, and the preferred fabric is a spunbonded polyester fabric, although nonwoven nylons and nonwoven polypropylenes are also useful. Other materials suitable for the decorative facing are vinyls and ABS.

It is common for the covering layer itself to be a composite comprised of a decorative facing of fabric, vinyl, or ABS backed by a foam impregnated with an adhesive and/or laminated to a thermoplastic film such as polyethylene or a web of polyamide. The foam backing of the decorative facing layer provides a soft feel when the decorative facing is touched. To avoid hardening the foam backing with a wet adhesive, it is preferred to employ a dry web or film adhesive of a thermoplastic nature. The adhesive on the foam backing is used to adhere the foam backing on decorative facing to the reinforcing layer and thermoformable foam layer. The dry web or film adhesive on the foam backed decorative facing also provides a uniform spread of adhesive across the covering layer; whereas, without the dry adhesive, the wet two-component adhesive used to adhere the thermoformable foam and the reinforcing layer does not usually penetrate the foam backing of covering layer in a uniform manner and leaves hard spots that can be felt by touching the covering layer. Suitable covering layers are commercially available under the name Dow 899.

The molded laminates described herein have use as self-supporting trim, reinforcing parts, shaped objects in railroad, automotive, and aircraft industries used as headliners, door and wall panels, dashboards, spoilers, and engine compartment shields. The products may also be used as trim in the furniture industry, audio/video industry, and construction industry.

The following examples illustrate an embodiment of the invention and is not intended to limit the scope of the claims.

## EXAMPLE 1

In this experiment, we set out to determine the effectiveness of a siloxy-based polycarbinol compound as a mold release agent in laminates made on a laboratory bench scale. Four samples of adhesive were employed, three to which were added a siloxy-based polycarbinol and one of which was a control without any adhesive. The adhesive used was a heat curable two-component Elastoflex® TF 2104R/TF 2100T Iso (polyol component and isocyanate component, respectively, commercially available from BASF Corporation) polyurethane adhesive commercially available from BASF Corporation. The polycarbinol compound

employed was Dow Corning® 1248 silicone fluid, a secondary hydroxyl trifunctional polydimethylsiloxane, commercially available from Dow Corning.

Sample 1 was a control which had no DC 1248. Sample 2 contained 1 weight percent, Sample 3 contained 2 weight percent, and Sample 4 contained 3 weight percent of DC 1248 based on the weight of Elastoflex® TF 2104R polyol component. The silicone fluids were thoroughly mixed into each of the polyol components, except for Sample 1, after which the Elastoflex® TF 2100T-Iso isocyanate component and the polyol component were combined and mixed for 15 seconds. Taking Sample 1, the adhesive was then evenly applied by brush to both sides of Custom Fit® 921 thermoformable polyurethane foam commercially available from Foamex Corporation. The adhesive was applied liberally to ensure bleed through the scrim. One side of the foam was laid up with a glass fiber reinforcing mat commercially available from Vetrox/Certainteed as Votrotex. Over the glass mat was laid up a scrim commercially available from The Stearns Technical Textiles Co. as Non-Woven Backing Scrim. On the underside of the foam was laid up the same mat and scrim in the same order as on the upper side. The layered construction was placed between two 120 °F preheated metal plates of a Tyler handpress machine. The plate surfaces each contained one application of a paste wax, but no external mold release was applied to the plates. The plates were pressed using about 60 p.s.i.g. of air to clamp the mold halves shut and held for about 2-3 minutes after which the laminate was released. The same procedure was followed for Samples 2-4. Each sample of adhesive was tested in a mold seven (7) times.

The results were as follows: Control Sample 1 stuck to the surface of a mold plate and had to be forcibly removed. Samples 2 through 4 did not require forcible removal from any of the metal plates even after seven (7) molding cycles, and Sample 2, which had only 1 weight percent of the silicone fluid, also exhibited good mold release properties. Forcibly attempting to delaminate the glass mats and scrim from the foam by hand resulted in tearing the foam rather than interfacial delamination.

## EXAMPLE 2

In this example, an adhesive formulation commercially available from BASF Corporation as Elastoflex 2104/TF 2100 Iso containing 1 weight percent of Dow Corning® 1248 silicone fluid, a seconary hydroxyl functional polydimethylsiloxane, based on the weight of the 2104 component, was metered in about a 1:1 weight percent ratio of iso/resin into a Binx spray machine which mixed the iso and resin at about 1400 psi using a spiral mixer. The adhesive was sprayed as amist at 17-20 g/$m^2$ onto both sides of a Customfit® 921 thermoformable foam available from Foamex. On the upper side of the foam was laid up a glass mat and a scrim, and on the lower side was laid up a glass mat and a decorative facing, in that order. The laminate was shuttled into a Jetta Standard mold and pressed at about 100 tons. The mold surfaces were neither waxed nor sprayed with external mold release prior to pressing. Thus, the mold surfaces were bare aluminum. Only after about 25 releases did slight sticking to the mold surfaces ocur. Adhesion of the foam to the glass mats and scrim was tested in an Instron and exhibited core foam tear rather than delamination.

## Claims

**1.** A heat curable two-component polyurethane internal mold release adhesive composition comprising a mixture of
   a) an organic isocyanate,
   b) a compound having at least two isocyanate reactive hydrogens, and
   c) a siloxy-based polycarbinol compound having an average of two or more secondary hydroxyl groups.

**2.** The adhesive of claim 1, wherein the polycarbinol compound has an average of three secondary hydroxyl groups per molecule.

**3.** The adhesive of claims 1 and 2, wherein the polycarbinol compound comprises a secondary hydroxyl polydimethylsiloxane.

**4.** The adhesive of claims 1 and 2, wherein the polycarbinol compound comprises a compound represented by the following formula:

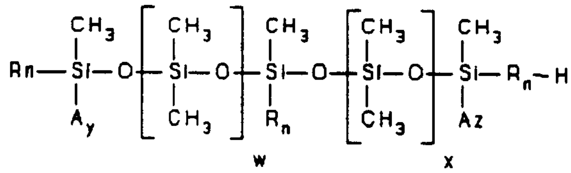

wherein each of R are independently an alkyl radical having 1 to 20 carbon atoms; an alicyclic, an aryl, an alkaryl or an aralkyl having 1 to 25 carbon atoms in the alkyl group; an aliphatic ether group; or a polyester group;

each of A are independently one or more silicone atoms containing alkyl, alicyclic, cycloalkyl, aryl, alkyloxy, alkaryl, aralkyl, or arylalkoxy groups having 1 to 25 carbon atoms in each aliphatic portion; an organosiloxane; hydrogen, or an alkyl having 1 to 25 carbon atoms;

n is an integer from 1 to 10;

and w + x + y + z totals an integer which would correspond to an average hydroxyl equivalent weight ranging from 200 to 4000.

**5.** The adhesive of claim 4, wherein each of R independently comprise an alkyl having from 1 to 10 carbon atoms, an alkoxy, or an ether having the formula

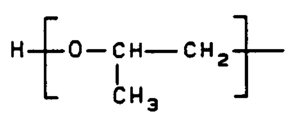

;

A comprises hydrogen, a $C_1$ - $C_4$ alkyl, or a siloxane having the formula

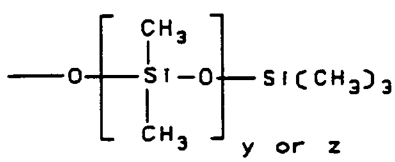

;

n comprises an integer of from 1 to 6, and w + x + y + z totals an integer corresponding to an average hydroxyl equivalent weight of the molecule ranging from 1250 to 3000.

**6.** The adhesive of claim 5, wherein R comprises an ether of the formula

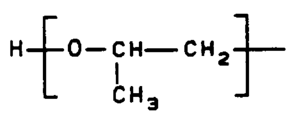

;

and A comprises a siloxane of the formula

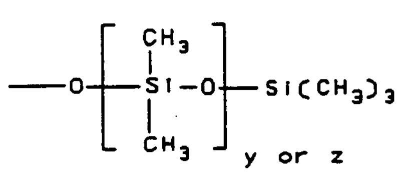

.

7. Be adhesive of claim 1, wherein the organic isocyanate is reacted with the b) compound in the presence of the c) polycarbinol compound and a polyurethane promoting catalyst.

8. Be adhesive of claim 7, wherein the b) compound comprises a polyoxyalkylene polyether polyol.

9. The adhesive of claim 7, wherein the polyurethane promoting catalyst comprises a metal carboxylate.

10. The adhesive of claim 7, wherein the amount of the b) compound is from 95.0 to 99.5 weight percent, the amount of polycarbinol compound is from 0.5 to 5.0 weight percent, and the amount of catalyst is from 0.1 to 2.0 weight percent, each based on the total weight of all ingredients except the isocyanate.

11. The adhesive of claim 10, wherein the amount of the b) compound is from 97.0 to 99.0 weight percent, the amount of polycarbinol compound is from 0.8 to 1.5 weight percent, and the amount of catalyst is from 0.4 to 0.8 weight percent, based on the weight of all ingredients except the isocyanate.

12. Be adhesive of claim 11, wherein the polycarbinol compound comprises a secondary hydroxyl functional polydimethylsiloxane having an average of three secondary hydroxyl functionalities per molecule and an average hydroxyl equivalent weight ranging from 1250 to 3000.

13. The adhesive of claim 12, wherein the polycarbinol compound comprises a compound represented by the following formula:

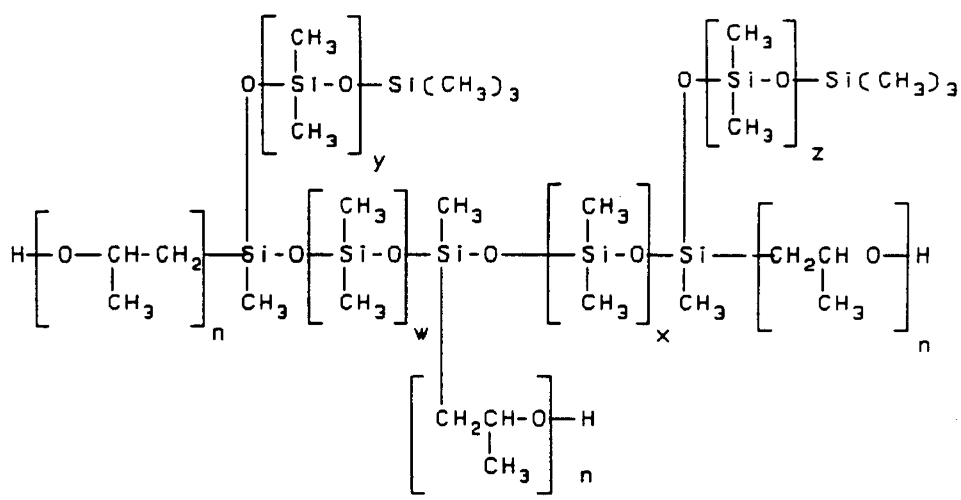

where each of n is independently an integer ranging from 1 to 4, and w + x + y + z corresponds to an average hydroxyl equivalent weight of the molecule of about 1725 to 2225.

14. The adhesive of claim 1, wherein the b) compound comprises a polyoxyalkylene polyether polyol.

15. The adhesive of claim 14, wherein the average hydroxyl number of the polyoxyalkylene polyether polyol ranges from 250 to 600.

16. A two-component heat curable polyurethane adhesive composition comprising:
   a) an organic aromatic isocyanate,
   b) a polyoxyalkylene polyether polyol,
   c) a polyurethane promoting catalyst, and
   d) a siloxane-based polycarbinol compound having an average of two or more secondary hydroxyl groups.

17. A composite article comprising a two-sided thermoformable polymer foam and a fiber adhesively bonded by a two-component heat curable adhesive composition to at least one of said two sides of the

thermoformable polymer foam, said adhesive composition comprising:
a) an organic isocyanate,
b) a polyoxyalkylene polyether polyol, a polyester polyol, or a mixture thereof,
c) a polyurethane promoting catalyst, and
d) a siloxane-based polycarbinol compound having an average of two or more secondary hydroxyl groups.

**18.** The composite article of claim 17, comprising a scrim, a first glass mat, the adhesive composition, a two-sided polyurethane thermoformable foam, the adhesive composition, a second glass mat, and a face fabric; wherein the scrim and the first glass mat are bonded through the adhesive composition to a first side of the foam and at least the second glass mat is bonded through the adhesive composition to a second side of the foam.

**19.** A process for mating a heat curable two-component polyurethane internal mold release adhesive composition comprising mixing:
a) an organic isocyanate,
b) a compound having at least two isocyanate reactive hydrogens, and
c) a siloxy-based polycarbinol compound having an average of two or more secondary hydroxyl groups.

**20.** A process for making a two-component heat curable polyurethane adhesive composition comprising mixing:
a) an organic aromatic isocyanate,
b) a polyoxyalkylene polyether polyol,
c) a polyurethane promoting catalyst, and
d) a siloxane-based polycarbinol compound having an average of two or more secondary hydroxyl groups.

**21.** A process for making a composite article comprising adhesively bonding a fiber to a two-sided thermoformable polymer foam by a two-component heat curable adhesive composition on at least one of said two sides of the thermoformable polymer foam, said adhesive composition comprising:
a) an organic isocyanate,
b) a polyoxyalkylene polyether polyol, a polyester polyol, or a mixture thereof,
c) a polyurethane promoting catalyst, and
d) a siloxane-based polycarbinol compound having an average of two or more secondary hydroxyl groups.

**22.** The process of claim 21, comprising laying up a scrim and a first glass mat to a first side of a two-sided polyurethane thermoformable foam and a second glass mat and a face fabric to a second side of the two-sided polyurethane thermoformable foam; wherein the scrim and the first glass mat are bonded through the adhesive composition to the first side of the foam and at least the second glass mat is bonded through the adhesive composition to the second side of the foam.

European Patent Office

# EUROPEAN SEARCH REPORT

Application Number
EP 95 10 5894

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | FR-A-1 475 917 (PITTSBURGH PLATE GLASS CO.)<br>* page 1, left column, paragraph 1 *<br>* page 2, left column, paragraph 3 *<br>* page 3, left column, paragraph 2 - right column, paragraph 5 *<br>--- | 1 | C08G18/61<br>C09J175/04<br>B32B7/12 |
| A | DE-A-30 12 126 (BAYER)<br>* claim 1 *<br>* page 12, line 1 - page 13, line 7 *<br>--- | 1 | |
| D,A | US-A-4 695 501 (L.W. ROBINSON)<br>* claims 1,2 *<br>* column 3, line 29 - line 48 *<br>* column 5, line 8 - line 44 *<br>--- | 1 | |
| A | DATABASE WPI<br>Week 9039,<br>Derwent Publications Ltd., London, GB;<br>AN 90-294841<br>& JP-A-2 208 040 (TOYO RUBBER) 17 August 1990<br>* abstract *<br>----- | 1 | TECHNICAL FIELDS SEARCHED (Int.Cl.6)<br>C08G |

The present search report has been drawn up for all claims

| Place of search | Date of completion of the search | Examiner |
|---|---|---|
| THE HAGUE | 1 August 1995 | Van Puymbroeck, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)